# EUROPEAN PATENT APPLICATION

(11) **EP 3 879 228 A1**
(43) Date of publication of application: **15.09.2021**
(21) Application number: 21161259.3
(22) Date of filing: 08.03.2021
(51) Int. Cl.: G01C 15/00

(54) **SURVEYING INSTRUMENT**

(30) Priority: 12.03.2020 JP 2020043017
(71) Applicant: TOPCON CORPORATION, Tokyo 174-8580 (JP)
(72) Inventor: YUASA, Taichi, Tokyo-to, 174-8580 (JP)
(74) Representative: Louis Pöhlau Lohrentz

(57) **Abstract**

A surveying instrument includes a distance measuring unit which measures a distance to an object, wherein the distance measuring unit comprises a light emitter configured to change an emission repetition frequency and the peak power of pulses of a distance measuring light to at least two, a light projecting optical system configured to project the distance measuring light, and a light receiving optical system configured to cause a photodetector to receive the reflected distance measuring light, wherein the light receiving optical system has a light amount adjusting member which is insertable and removable with respect to an optical axis of the reflected distance measuring light, and the light amount adjusting member configured to adjust a light receiving amount of the reflected distance measuring light in correspondence with the emission repetition frequency and the peak power of the pulses.

## Description

### BACKGROUND OF THE INVENTION

The present invention relates to a surveying instrument which can acquire three-dimensional coordinates of an object.

A surveying instrument such as a laser scanner or a total station has an electro-optical distance measurement device which measures a distance to an object by the prism distance measurement using a reflecting prism as the object or the non-prism distance measurement using no reflecting prism.

For instance, pulsed laser beams used in the laser scanner are required to change a repetition frequency of pulses in correspondence with the point cloud measurement density of the object, a limitation of a laser safety class, and the like. On the other hand, when the repetition frequency of the pulses is changed, the peak power of the pulses may also change in correspondence with the change in repetition frequency.

In general, the surveying device has a fixed light receiving amount which enables the surveying, and an electrical system is saturated when the fixed light receiving amount is exceeded. For this reason, in an optical system designed on the assumption of the predetermined peak power, when the peak power has exceeded an expected value due to a reduction in repetition frequency of the pulses, the light receiving amount increases. There has been a problem in which the light receiving amount increases, especially at short distances and the electrical system is saturated.

### SUMMARY OF INVENTION

It is an object of the present invention to provide a surveying instrument which can suppress the saturation of the electrical system at the time of performing the measurement at short distances.

To attain the object as described above, a surveying instrument according to the present invention includes a distance measuring unit which irradiates an object with the distance measuring light and measures a distance to the object based on the reflected distance measuring light from the object, wherein the distance measuring unit comprises a light emitter configured to change an emission repetition frequency and the peak power of pulses of the distance measuring light to at least two, a light projecting optical system configured to project the distance measuring light, and a light receiving optical system configured to cause a photodetector to receive the reflected distance measuring light, wherein the light receiving optical system has a light amount adjusting member which is insertable and removable with respect to an optical axis of the reflected distance measuring light, and the light amount adjusting member configured to adjust a light receiving amount of the reflected distance measuring light in correspondence with the emission repetition frequency and the peak power of the pulses.

Further, in the surveying instrument according to a preferred embodiment, the light receiving optical system further comprises a deflecting optical member configured to deflect the distance measuring light coaxially with the reflected distance measuring light, wherein the deflecting optical member has a beam splitter surface which has the same or substantially the same diameter as a diameter of a light flux of the distance measuring light formed at an incidence position of the distance measuring light.

Further, in the surveying instrument according to a preferred embodiment, the light amount adjusting member is configured in such a manner that a light amount adjusting surface having a film with a predetermined transmittance is formed at a central portion, and a full-transmission surface having an antireflection film is formed at other portions than the light amount adjusting surface.

Further, in the surveying instrument according to a preferred embodiment, the light amount adjusting member is configured in such a manner that a full-transmission surface having an antireflection film is formed at a central portion, and a light amount adjusting surface having a film with a predetermined transmittance is formed at other portions than the full-transmission surface.

Further, in the surveying instrument according to a preferred embodiment, the light receiving optical system further comprises a receiving light lens which condenses the reflected distance measuring light, wherein the receiving light lens is a multifocal lens having a curvature increased in a central portion.

Further, in the surveying instrument according to a preferred embodiment, the light receiving optical system further comprises a receiving light lens which receives the reflected distance measuring light, wherein the receiving light lens is a multifocal lens having a curvature increased in an outer peripheral portion.

Further, in the surveying instrument according to a preferred embodiment, the light receiving optical system further comprises a light receiving prism having a square surface formed by an optical axis, and the light receiving prism is configured to internally reflect the reflected distance measuring light in the light receiving prism at least three times.

Further, in the surveying instrument according to a preferred embodiment, the light amount adjusting member has a disk-like shape rotatable via a rotation shaft, and the light amount adjusting member has at least three light amount adjusting portions configured to coincide with an optical axis of the reflected distance measuring light, and one of the light amount adjusting portions are configured to enable selectively arranging on the optical axis of the reflected distance measuring light by the rotation of the light amount adjusting member.

Furthermore, in the surveying instrument according to a preferred embodiment, further comprising a frame unit which horizontally rotates around a horizontal rotation shaft by a horizontal rotation motor, a scanning mirror which is provided to the frame unit, vertically rotates around a vertical rotation shaft by a vertical rotation motor, irradiates the object with the distance measuring light, and causes the reflected distance measuring light from the object to enter the light receiving optical system, and an arithmetic control module which controls the driving of the horizontal rotation motor, the vertical rotation motor, and the distance measuring unit, wherein the distance measuring unit further comprises a tracking light projecting optical system which irradiates the object with the tracking light coaxially with the distance measuring light and a tracking light receiving optical system which leads the reflected tracking light from the object to a tracking photodetector, wherein the arithmetic control module is configured to control the horizontal rotation motor and the vertical rotation motor based on a light receiving position of the reflected tracking light with respect to the tracking photodetector in such a manner that the object is tracked.

According to the present invention, a surveying instrument includes a distance measuring unit which irradiates an object with the distance measuring light and measures a distance to the object based on the reflected distance measuring light from the object, wherein the distance measuring unit comprises a light emitter configured to change an emission repetition frequency and the peak power of pulses of the distance measuring light to at least two, a light projecting optical system configured to project the distance measuring light, and a light receiving optical system configured to cause a photodetector to receive the reflected distance measuring light, wherein the light receiving optical system has a light amount adjusting member which is insertable and removable with respect to an optical axis of the reflected distance measuring light, and the light amount adjusting member configured to adjust a light receiving amount of the reflected distance measuring light in correspondence with the emission repetition frequency and the peak power of the pulses. As a result, an electrical system can be prevented from being saturated at the time of performing the short-distance measurement.

### BRIEF DESCRIPTION OF THE DRAWINGS

FIG.1 is a front sectional drawing showing a surveying instrument according to a first embodiment of the present invention.
FIG.2 is a block diagram showing a light projecting optical system and a light receiving optical system of the surveying instrument according to the first embodiment of the present invention.
FIG.3A is a side elevation showing a deflecting optical member of the light receiving optical system, and FIG.3B is a side elevation showing a light amount adjusting member of the light receiving optical system.
FIG.4 is a graph showing a relationship between a light receiving amount and a distance when the light amount adjusting member has been inserted and removed.
FIG.5A is a block diagram showing a light projecting optical system and a light receiving optical system of a surveying instrument according to a second embodiment of the present invention, and FIG.5B is a side elevation showing a light amount adjusting member of the light receiving optical system.
FIG.6 is a block diagram showing a light projecting optical system and a light receiving optical system of a surveying instrument according to a third embodiment of the present invention.
FIG.7 is a block diagram showing a light projecting optical system and a light receiving optical system of a surveying instrument according to a fourth embodiment of the present invention.
FIG.8 is a block diagram showing a light projecting optical system and a light receiving optical system of a surveying instrument according to a fifth embodiment of the present invention.
FIG.9A is a block diagram showing a light projecting optical system and a light receiving optical system of a surveying instrument according to a sixth embodiment of the present invention, and FIG.9B is a bottom view showing a light amount adjusting member of the light receiving optical system.
FIG.10 is a block diagram showing a light projecting optical system and a light receiving optical system of a surveying instrument according to a seventh embodiment of the present invention.

### DETAILED DESCRIPTION OF THE PREFERRED EMBODIMENTS

A description will be given below on the embodiments of the present invention by referring to the attached drawings.

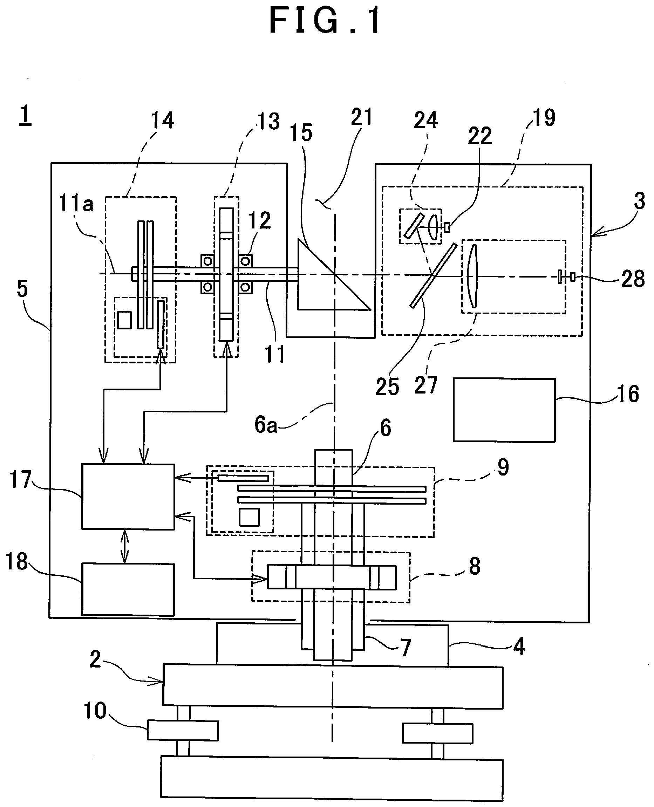

First, by referring to FIG.1, a description will be given on a surveying instrument according to a first embodiment of the present invention.

A surveying instrument 1 is, for instance, a laser scanner, and constituted of a leveling unit 2 mounted on a tripod (not shown) and a surveying instrument main body 3 mounted on the leveling unit 2. It is to be noted that, as the measurement, the non-prism measurement is performed.

The leveling unit 2 has leveling screws 10, and the surveying instrument main body 3 is leveled up by the leveling screws 10.

The surveying instrument main body 3 includes a base unit 4, a frame unit 5 which is a horizontal rotation module, a horizontal rotation shaft 6, a horizontal rotation bearing 7, a horizontal rotation motor 8 as a horizontal rotation driving module, a horizontal angle encoder 9 as a horizontal angle detector, a vertical rotation shaft 11, a vertical rotation bearing 12, a vertical rotation motor 13 as a vertical rotation driving module, a vertical angle encoder 14 as a vertical angle detector, a scanning mirror 15 which is a vertical rotation module, an operation panel 16 which serves as both an operation module and a display unit, an arithmetic control module 17, a storage module 18, a distance measuring unit 19 and others. It is to be noted that, as the arithmetic control module 17, a CPU specialized for this instrument or a general-purpose CPU is used.

The horizontal rotation bearing 7 is fixed to the base unit 4. The horizontal rotation shaft 6 has a vertical axis 6a, and the horizontal rotation shaft 6 is rotatably supported by the horizontal rotation bearing 7. Further, the frame unit 5 is supported by the horizontal rotation shaft 6, and the frame unit 5 integrally rotates with the horizontal rotation shaft 6 in the horizontal direction.

The horizontal rotation motor 8 is provided between the horizontal rotation bearing 7 and the frame unit 5, and the horizontal rotation motor 8 is controlled by the arithmetic control module 17. The arithmetic control module 17 rotates the frame unit 5 around the axis 6a by the horizontal rotation motor 8.

A relative rotation angle of the frame unit 5 with respect to the base unit 4 is detected by the horizontal angle encoder 9. A detection signal from the horizontal angle encoder 9 is input to the arithmetic control module 17, and the horizontal angle data is calculated by the arithmetic control module 17. The arithmetic control module 17 performs the feedback control over the horizontal rotation motor 8 based on the horizontal angle data.

Further, in the frame unit 5, the hollow vertical rotation shaft 11 having a horizontal axis 11a is provided. The vertical rotation shaft 11 can rotate via the vertical rotation bearing 12. It is to be noted that an intersection of the axis 6a and the axis 11a is a projecting position for the distance measuring light, and the intersection is an origin of a coordinate system of the surveying instrument main body 3.

A recess 21 is formed in the frame unit 5. One end portion of the vertical rotation shaft 11 extends to the inside of the recess 21, and the scanning mirror 15 is fixed to the one end portion. The scanning mirror 15 is accommodated in the recess 21. Further, the vertical angle encoder 14 is provided at the other end portion of the vertical rotation shaft 11.

The vertical rotation motor 13 is provided on the vertical rotation shaft 11, and the vertical rotation motor 13 is controlled by the arithmetic control module 17. The arithmetic control module 17 rotates the vertical rotation shaft 11 by the vertical rotation motor 13, and the scanning mirror 15 is rotated around the axis 11a.

A rotation angle of the scanning mirror 15 is detected by the vertical angle encoder 14, and a detection signal is input to the arithmetic control module 17. The arithmetic control module 17 calculates the vertical angle data of the scanning mirror 15 based on the detection signal, and performs the feedback control over the vertical rotation motor 13 based on the vertical angle data.

Further, the horizontal angle data and the vertical angle data calculated by the arithmetic control module 17 and measurement results are stored in the storage module 18. As the storage module 18, various types of storage devices are used. These storage devices include: an HDD as a magnetic storage device, a CD or DVD as an optical storage device, a memory card and a USB memory as a semiconductor storage device and other storage devices. The storage module 18 may be attachable and detachable the frame unit 5. Alternatively, the storage module 18 may be configured to enable transmitting the data to an external storage device or an external data processing device via a non-illustrated communicating means.

In the storage module 18, various types of programs are stored. These programs include: a sequence program for controlling a distance measuring operation, a calculation program for calculating a distance by the distance measuring operation, a calculation program for calculating an angle based on the horizontal angle data and the vertical angle data, a program for calculating three-dimensional coordinates of a desired measuring point based on a distance and an angle, a control program for controlling the driving of a light amount adjusting member (to be described later) and other programs. Further, when the various types of programs stored in the storage module 18 are executed by the arithmetic control module 17, various types of processing are performed.

The operation panel 16 is, for instance, a touch panel, and serves as both an operation module which performs, for instance, changing distance measurement instructions or measurement conditions such as a measuring point interval and a display unit which displays a distance measurement result and the like.

Next, a description will be given on the distance measuring unit 19.

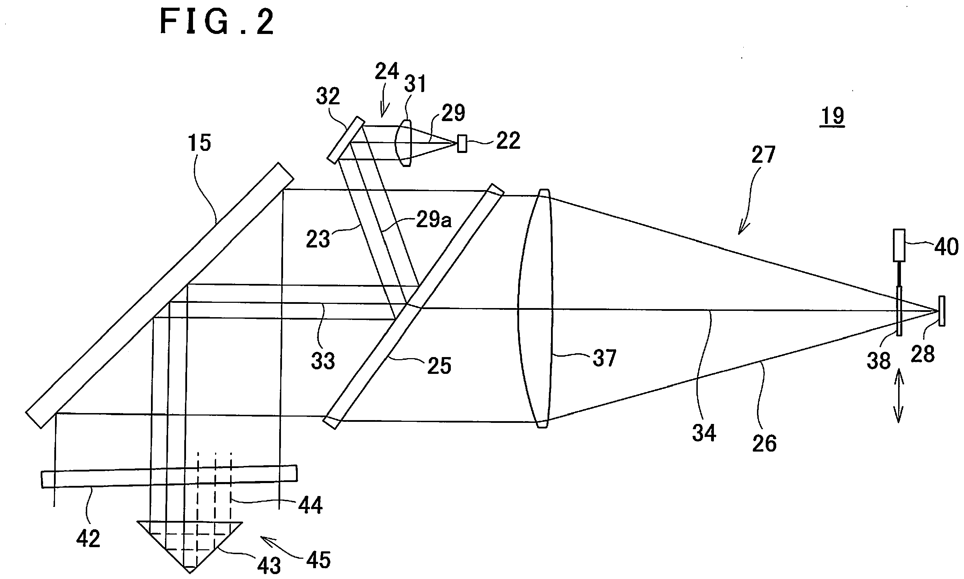

The distance measuring unit 19 is controlled by the arithmetic control module 17. When the distance measuring light 23 (see FIG.2) which is the pulsed light is projected from a light emitter 22, the distance measuring light 23 is projected via a light projecting optical system 24 and a deflecting optical member 25. An optical axis of the distance measuring light 23 projected from the defecting optical member 25 coincides with the axis 11a, and the distance measuring light is deflected at a right angle by the scanning mirror 15. When the scanning mirror 15 rotates around the axis 11a, the distance measuring light 23 becomes orthogonal to the axis 11a, and the distance measuring light 23 is rotated (scanned) within a plane including the axis 6a.

The distance measuring light 23 reflected by an object (hereinafter the reflected distance measuring light 26 (see FIG.2)) strikes upon the scanning mirror 15, and the reflected distance measuring light 26 is reflected by the scanning mirror 15. The reflected distance measuring light 26 deflected by the scanning mirror 15 is received by a photodetector 28 via the deflecting optical member 25 and a light receiving optical system 27.

The distance measuring unit 19 performs the distance measurement for each pulse of the distance measuring light based on a time lag between a light emission timing of the light emitter 22 and a light reception timing of the photodetector 28 (that is, a round-trip time of the pulsed light) and a light velocity (Time of Flight). A light emission timing, that is, a pulse interval of the light emitter 22 is changeable by the arithmetic control module 17.

It is to be noted that an internal reference light optical system (to be described later) is provided in the distance measuring unit 19. By performing the distance measurement based on a time lag between the light reception timing of the internal reference light (to be described later) received from the internal reference light optical system and the light reception timing of the reflected distance measuring light 26 and the light velocity, the distance measuring unit 19 enables the further accurate distance measurement.

The frame unit 5 and the scanning mirror 15 rotate at constant speeds, respectively, and by the cooperation between the vertical rotation of the scanning mirror 15 and the horizontal rotation of the frame unit 5, a two-dimensional scan using the distance measuring light 23 is performed. Further, since the distance measurement data (a slope distance) is acquired by the distance measurement for each pulsed light, by detecting a vertical angle and a horizontal angle for each pulsed light by the vertical angle encoder 14 and the horizontal angle encoder 9, the arithmetic control module 17 enables calculating the vertical angle data and the horizontal angle data. The three-dimensional point cloud data corresponding to the object can be acquired based on the vertical angle data, the horizontal angle data, and the distance measurement data.

Next, in FIG.2, a description will be given on the detail of the light projecting optical system 24 and the light receiving optical system 27.

The light projecting optical system 24 has a light projecting lens 31 and a reflecting mirror 32 provided on an optical axis of the distance measuring light 23 (a light projecting optical axis 29). Further, on a reflection optical axis 29a of the reflecting mirror 32, the deflecting optical member 25 is provided. It is to be noted that the light projecting optical system 24 may include the deflecting optical member 25.

The light emitter 22 as a distance measuring light source pulse-emits a laser beam having an infrared or near-infrared wavelength as the distance measuring light 23. Alternatively, the light emitter 22 burst-emits a laser beam as the distance measuring light 23. The reflecting mirror 32 is configured to deflect the distance measuring light 23 (the light projecting optical axis 29) toward the deflecting optical member 25 at a predetermined angle.

The deflecting optical member 25 is, for instance, the tabular glass having a predetermined glass thickness, and the deflecting optical member 25 is configured to deflect the reflection optical axis 29a to a distance measuring optical axis 33. It is to be noted that the distance measuring optical axis 33 is the same axis as a light receiving optical axis 34 (to be described later). That is, the deflecting optical member 25 is provided on a common optical path of the distance measuring light 23 and the reflected distance measuring light 26, and deflects the reflection optical axis 29a coaxially with the light receiving optical axis 34.

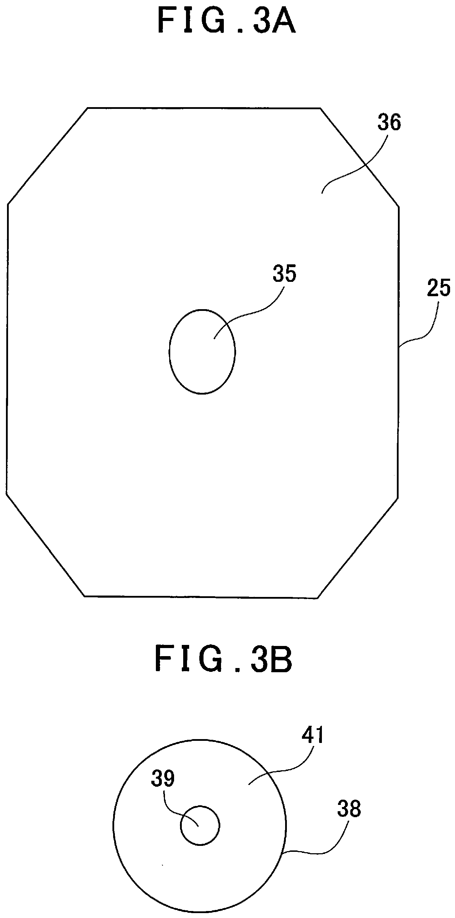

As shown in FIG.3A, in an incidence surface of the deflecting optical member 25 for the distance measuring light 23, a beam splitter surface 35 having a beam splitter film vapor-deposited is formed at a central portion, and an antireflection surface 36 having an antireflection film vapor-deposited is formed at other portions than the beam splitter surface 35. It is to be noted that the beam splitter surface 35 is formed only at a portion which the distance measuring light 23 enters. That is, a light flux of the distance measuring light 23 has a circular shape, but the deflecting optical member 25 tilts with respect to the reflection optical axis 29a. Therefore, the beam splitter surface 35 has an elliptic shape which is equivalent to or slightly larger than a beam diameter of the distance measuring light 23. Further, for instance, the beam splitter surface 35 has optical characteristics to reflect the light which is approximately 80% and transmit through the light which is approximately 20%.

The light receiving optical system 27 has the deflecting optical member 25, a receiving light lens 37 having a predetermined NA (numerical aperture) and a light amount adjusting member 38 which are provided on the light receiving optical axis 34.

The light amount adjusting member 38 is, for instance, the plane-parallel plate glass having a known glass thickness, and arranged in such a manner that the light amount adjusting member 38 becomes orthogonal to the light receiving optical axis 34. Further, the light amount adjusting member 38 can be inserted into and removed from an optical path (the light receiving optical axis 34) of the reflected distance measuring light 26 by a driving mechanism 40 such as a solenoid. Further, a diameter of the light amount adjusting member 38 is, for instance, approximately 6 mm, and the diameter of the light amount adjusting member 38 is larger than a beam diameter of the reflected distance measuring light 26 at a position where the light amount adjusting member 38 has been inserted.

As shown in FIG.3B, in an incidence surface of the light amount adjusting member 38 for the reflected distance measuring light 26, a light amount adjusting surface 39 having, for instance, a reflection film vapor-deposited is formed at a central portion, and a full-transmission surface 41 having an antireflection film vapor-deposited is formed at other portions than the light amount adjusting surface 39. The light amount adjusting surface 39 has, for instance, a circular shape having a diameter of approximately 1 mm with the light receiving optical axis 34 as a center. That is, approximately 5 to 10% of the incidence surface of the light amount adjusting member 38 for the reflected distance measuring light 26 serve as the light amount adjusting surface.

The reflected distance measuring light 26 reflected by the object has an increased light amount in a central portion in a case where the short-distance measurement has been performed, and an increased light amount in a peripheral portion in a case where the long-distance measurement has been performed. Therefore, a light dimming function brought about by the light amount adjusting surface 39 mainly affects the reflected distance measuring light 26 when the short-distance measurement has been performed.

It is to be noted that, as described above, the light amount adjusting surface 39 is a reflection surface, but the light amount adjusting surface 39 should have optical characteristics that allow the transmission of 10% to 50% of the light. For instance, the light amount adjusting surface 39 may be a reflection film having an 80% reflectivity and a 20% transmittance or an absorption film having an 80% absorptance and a 20% transmittance. Alternatively, the light amount adjusting surface 39 may be an electrochromic element having an arbitrary transmittance which can be changed depending on a voltage. An area or the transmittance of the light amount adjusting surface 39 can be appropriately set in correspondence with an emission repetition frequency (an output) of the distance measuring light 23 or the specifications of the receiving light lens 37 and the deflecting optical member 25.

Further, a window portion 42 and a reference prism 43 having a retroreflective property are provided below the scanning mirror 15. The window portion 42 is configured to slightly tilt with respect to the distance measuring optical axis 33 reflected by the scanning mirror 15 and rotate integrally with the scanning mirror 15.

Further, the reference prism 43 is configured in such a manner that the distance measuring light 23 is incident thereon in a process of the rotary irradiation of the distance measuring light 23 via the scanning mirror 15. The distance measuring light 23 retro-reflected by the reference prism 43 enters the light receiving optical system 27 as the internal reference light 44 via the scanning mirror 15, and the internal reference light 44 is received by the photodetector 28.

Here, an optical path length from the light emitter 22 to the reference prism 43 and an optical path length from the reference prism 43 to the photodetector 28 are known. Therefore, the distance measuring light 23 reflected by the reference prism 43 can be used as the internal reference light 44. The scanning mirror 15 and the reference prism 43 constitute an internal reference light optical system 45.

The distance measuring light 23 emitted from the light emitter 22 is irradiated to the object via the light projecting optical system 24, the deflecting optical member 25 and the scanning mirror 15. The reflected distance measuring light 26 which has been reflected by the object and entered the light receiving optical system 27 via the scanning mirror 15 and the deflecting optical member 25 is received by the photodetector 28 via the receiving light lens 37 or via the receiving light lens 37 and the light amount adjusting member 38. It is to be noted that a glass thickness of the light amount adjusting member 38 is known. Therefore, the extension of an optical path length of the reflected distance measuring light 26 caused by the insertion of the light amount adjusting member 38 can be easily corrected by subtracting an offset value based on the glass thickness from a measurement result.

In the surveying instrument 1, the light emitter 22 can change the emission repetition frequency of the distance measuring light 23 and the peak power of pulses in correspondence with properties of the object such as a color of the object. It is to be noted that, depending on types of the light emitter 22, the emission repetition frequency of the distance measuring light 23 has properties such that the peak power of the pulses becomes smaller as the emission repetition frequency becomes larger, and the peak power of the pulses becomes larger as the emission repetition frequency becomes smaller. For instance, in the present embodiment, the peak power is 200 W when the emission repetition frequency of the distance measuring light 23 is 1 MHz, the peak power is 350 W when the emission repetition frequency is 500 kHz, and the peak power is 1000 W when the emission repetition frequency is 100 kHz.

In the present embodiment, for instance, 100 kHz and 1 MHz are set in advance as the switchable emission repetition frequencies of the distance measuring light 23. Further, an allowable light receiving amount of the photodetector 28 is set to a value at which an electrical system is not saturated with the light receiving amount at a short distance when the emission repetition frequency of the distance measuring light 23 is the highest (1 MHz), that is, when the peak power is the lowest (200 W).

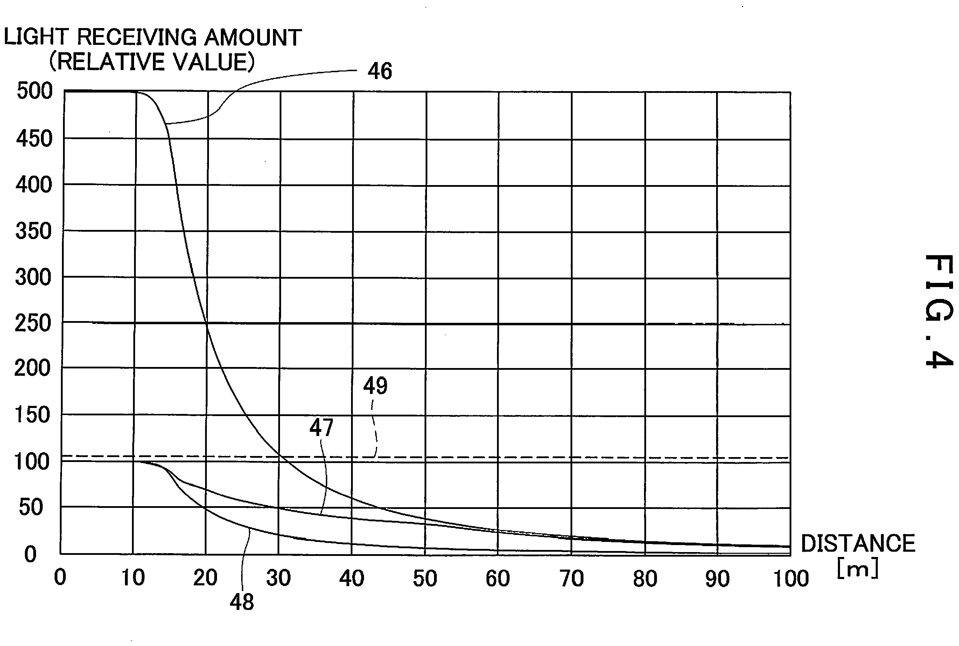

FIG.4 shows a relationship between a distance and a light receiving amount in a case where the light amount adjusting member 38 has been removed from an optical path of the reflected distance measuring light 26 and in a case where the emission repetition frequency of the distance measuring light 23 has been changed.

In FIG.4, a curve 46 represents a relationship between a light receiving amount and a distance in a case where the emission repetition frequency of the distance measuring light 23 is 100 kHz and the light amount adjusting member 38 has been removed from the optical path of the reflected distance measuring light 26. Further, in FIG.4, a curve 47 represents a relationship between a light receiving amount and a distance in a case where the emission repetition frequency of the distance measuring light 23 is 100 kHz and the light amount adjusting member 38 has been inserted into the optical path of the reflected distance measuring light 26. Further, in FIG.4, a curve 48 represents a relationship between a light receiving amount and a distance in a case where the emission repetition frequency of the distance measuring light 23 is 1 MHz and the light amount adjusting member 38 has been removed from the optical path of the reflected distance measuring light 26. Further, in FIG.4, a broken line 49 represents a light receiving amount with which the electrical system is not saturated in the surveying instrument 1.

As indicated by the curve 46, in a case where the emission repetition frequency of the distance measuring light 23 is 100 kHz, in a state where the light amount adjusting member 38 is not present on the optical path of the reflected distance measuring light 26, the light receiving amount exceeds the broken line 49 at a short distance within 30 m, and the electrical system is saturated. On the other hand, as indicated by the curve 47, in a state where the light amount adjusting member 38 is present on the optical path of the reflected distance measuring light 26, the light receiving amount falls below the broken line 49 at a short distance within 30 m, and the electrical system is not saturated.

Further, as indicated by the curve 48, when the emission repetition frequency of the distance measuring light 23 is 1 MHz, even in a case where the light amount adjusting member 38 is not present on the optical path of the reflected distance measuring light 26, the light receiving amount falls below the broken line 49, and the electrical system is not saturated.

As described above, in a first embodiment, since a light receiving amount of the reflected distance measuring light 26 with respect to the photodetector 28 can be adjusted by the insertion/removal of the light amount adjusting member 38 into/from the optical path of the reflected distance measuring light 26, even if the emission repetition frequency of the distance measuring light 23 has been changed from 100 kHz to 1 MHz or from 1 MHz to 100 kHz, it is possible to prevent the light receiving amount from exceeding the broken line 49 and the electrical system from being saturated.

Therefore, even in case of performing the short-distance measurement, the emission repetition frequency of the distance measuring light 23 and the peak power of the pulses can be changed in correspondence with properties of the object such as a color of the object, and the workability can be improved.

Further, in the first embodiment, based on the short-distance measurement when the distance measuring light 23 has the largest emission repetition frequency, the allowable light receiving amount of the photodetector 28 is set so that the electrical system of the surveying instrument 1 is not saturated, and the light amount adjusting member 38 is inserted into the optical path of the reflected distance measuring light 26 when the emission repetition frequency of the distance measuring light 23 has been reduced.

Therefore, at the time of changing the emission repetition frequency to be used, just changing the light amount adjusting member 38 corresponding to the changed emission repetition frequency can suffice, and hence the design of the surveying instrument 1 itself does not have to be changed.

Further, in the first embodiment, since only the central portion of the light amount adjusting member 38 serves as the light amount adjusting surface 39, only the reflected distance measuring light 26 in the central portion, which increases in the short-distance measurement, can be dimmed.

Therefore, since a decrease in light receiving amount at the time of performing the long-distance measurement can be minimized, a reduction of a measurement distance can be suppressed.

Further, the light amount adjusting member 38 is a plane-parallel plate having a known glass thickness, and arranged in such a manner that the light amount adjusting member 38 becomes orthogonal to the light receiving optical axis 34. Therefore, the light receiving optical axis 34 is not deflected by the insertion of the light amount adjusting member 38.

Further, the window portion 42 rotating integrally with the scanning mirror 15 slightly tilts with respect to the distance measuring optical axis 33. Therefore, the distance measuring light 23 reflected by the window portion 42 can be prevented from entering the photodetector 28, and a measurement accuracy can be improved.

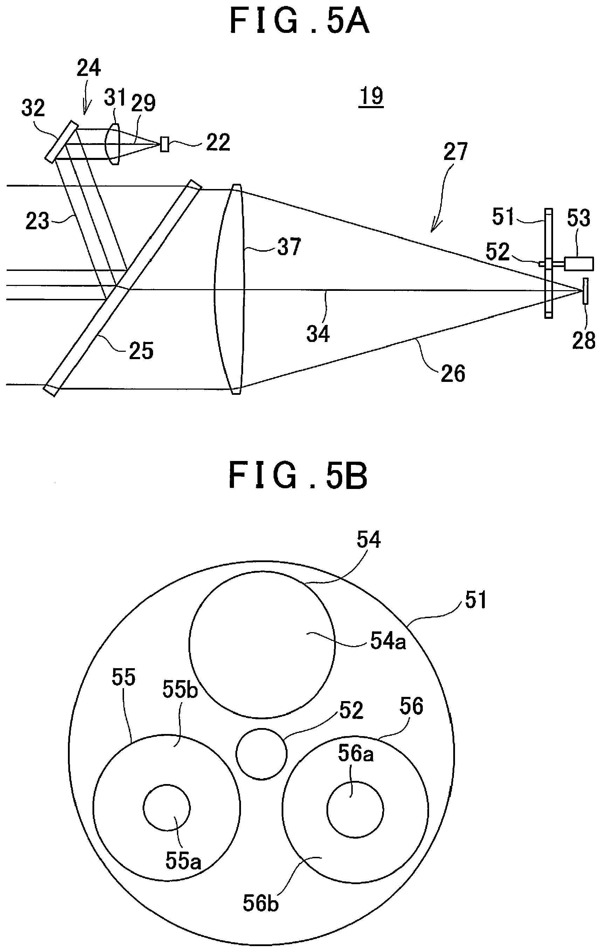

Next, a description will be given on a second embodiment of the present invention by referring to FIG.5A and FIG.5B. It is to be noted that, in FIG.5A, the same components as shown in FIG.2 are referred by the same symbols, and a detailed description thereof will be omitted.

In the first embodiment, a light amount adjusting member 38 is inserted into or removed from a light receiving optical axis 34 via the driving mechanism such as a solenoid. On the other hand, in the second embodiment, a disk-like light amount adjusting member 51 is provided on the light receiving optical axis 34. The light amount adjusting member 51 is configured to be able to rotate around a rotation shaft 52 by a motor 53.

The light amount adjusting member 51 has a first light amount adjusting portion 54, a second light amount adjusting portion 55 and a third light amount adjusting portion 56 which are provided at predetermined angular intervals, for instance, intervals of 120°. Each of the first light amount adjusting portion 54, the second light amount adjusting portion 55 and the third light amount adjusting portion 56 is a circular plane-parallel plate and has a diameter larger than a beam diameter of the reflected distance measuring light 26. Further, the light amount adjusting member 51 is configured to enable selectively arranging any one of the first light amount adjusting portion 54, the second light amount adjusting portion 55 and the third light amount adjusting portion 56 on the light receiving optical axis 34 by the rotation around the rotation shaft 52.

The first light amount adjusting portion 54 is, for instance, a full-transmission surface 54a having an antireflective film entirely provided thereon. A light amount adjusting surface 55a having a film with a predetermined area and a predetermined transmittance provided thereon is formed at a central portion of the second light amount adjusting portion 55, and a full-transmission surface 55b having an antireflection film provided thereon is formed at other portions than the light amount adjusting surface 55a. Further, a light amount adjusting surface 56a having a film with an area and a transmittance, which are different from the area and the transmittance of the light amount adjusting surface 55a, provided thereon is formed at a central portion of the third light amount adjusting portion 56, and a full-transmission surface 56b having an antireflection film provided thereon is formed at other portions than the light amount adjusting surface 56a.

The first light amount adjusting portion 54 does not have a light dimming function on the entire surface. That is, the same effect as that when the light amount adjusting member 38 has been removed from the optical path of the reflected distance measuring light 26 can be acquired.

Further, the second light amount adjusting portion 55 (the light amount adjusting surface 55a) can acquire a light dimming effect so that an electrical system is not saturated even at a short distance when an emission repetition frequency of the distance measuring light 23 is, for instance, 100 kHz.

Further, the third light amount adjusting portion 56 (the light amount adjusting surface 56a) can acquire a light dimming effect so that the electrical system is not saturated even at a short distance when the emission repetition frequency of the distance measuring light 23 is, for instance, 500 kHz.

As described above, in the second embodiment, the first light amount adjusting portion 54, the second light amount adjusting portion 55 and the third light amount adjusting portion 56 provided in the light amount adjusting member 51 have different light dimming functions respectively, and the first light amount adjusting portion 54, the second light amount adjusting portion 55 and the third light amount adjusting portion 56 can be selectively arranged on the light receiving optical axis 34 by the rotation of the light amount adjusting member 51.

Therefore, three emission repetition frequencies of the distance measuring light 23 can be freely selected without saturating the electrical system, and the workability can be improved.

It is to be noted that, in the second embodiment, the three light amount adjusting portions 54, 55 and 56 are formed in the light amount adjusting member 51. On the other hand, needless to say, the four or more light amount adjusting portions may be provided.

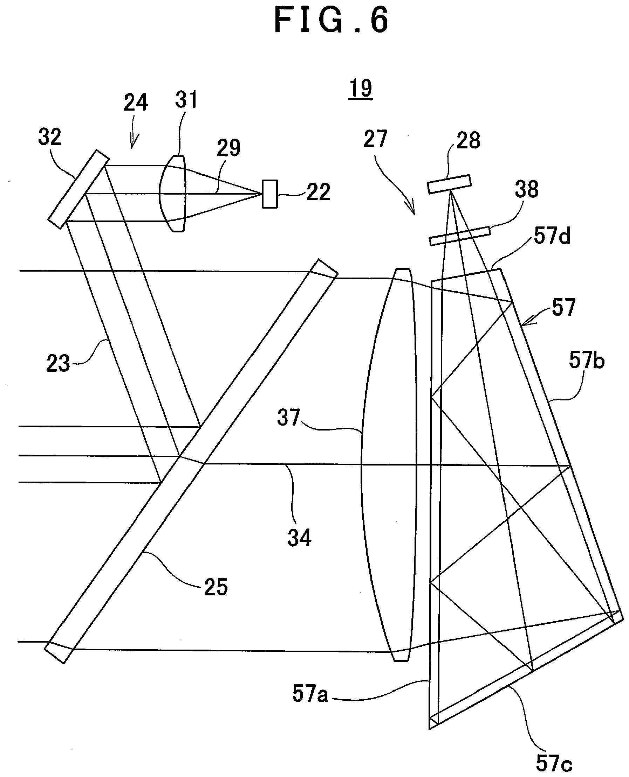

Next, a description will be given on a third embodiment of the present invention by referring to FIG.6. It is to be noted that, in FIG.6, the same components a shown in FIG.2 are referred by the same symbols, and a detailed description thereof will be omitted.

In the third embodiment, a light receiving optical system 27 has a light receiving prism 57 provided between a receiving light lens 37 and a light amount adjusting member 38. The light receiving prism 57 is a prism which has a predetermined refractive index and in which a surface formed by the light receiving optical axis 34 has a square shape. The light receiving prism 57 is, for instance, a prism having a quadrangular cross section.

The light receiving prism 57 has a first surface 57a which the reflected distance measuring light 26 transmitted through the receiving light lens 37 enters, a second surface 57b which reflects the reflected distance measuring light 26 transmitted through a plane of the first surface 57a, a third surface 57c which the reflected distance measuring light 26 reflected by the second surface 57b and the first surface 57a enters, and a fourth surface 57d as a transmission surface which the reflected distance measuring light 26 reflected by the third surface 57c is transmitted through. The reflected distance measuring light 26 transmitted through the fourth surface 57d enters a photodetector 28. Alternatively, the reflected distance measuring light 26 transmitted through the fourth surface 57d enters the photodetector 28 via the light amount adjusting member 38.

In the third embodiment, an object is irradiated with the distance measuring light 23 emitted from a light emitter 22 via the light projecting optical system 24, a deflecting optical member 25 and the scanning mirror 15. The reflected distance measuring light 26 which has been reflected by the object and entered a light receiving optical system 27 via the scanning mirror 15 is refracted in a process of being transmitted through the receiving light lens 37 and the first surface 57a. Further, the reflected distance measuring light 26 is sequentially reflected by the second surface 57b, the first surface 57a and the third surface 57c in the light receiving prism 57, transmitted through the fourth surface 57d, and received by the photodetector 28. Alternatively, the reflected distance measuring light 26 is received by the photodetector 28 via the light amount adjusting member 38.

In the third embodiment, the light receiving optical system 27 has the light receiving prism 57 having the reflection surfaces therein, and the light receiving prism 57 internally reflects the reflected distance measuring light 26 three times in the light receiving prism 57 and refracts an optical path of the reflected distance measuring light 26. Thereby, the light receiving optical system 27 ensures an optical path length corresponding to a focal distance of the receiving light lens 37.

Therefore, since a length in an optical axis direction of the light receiving optical system 27 can be shortened, an optical system of a distance measuring unit 19 can be miniaturized, and an entire surveying instrument can be miniaturized.

It is to be noted that, needless to say, the second embodiment can be combined with the third embodiment, and the light amount adjusting member 38 can be replaced with the light amount adjusting member 51 in the second embodiment.

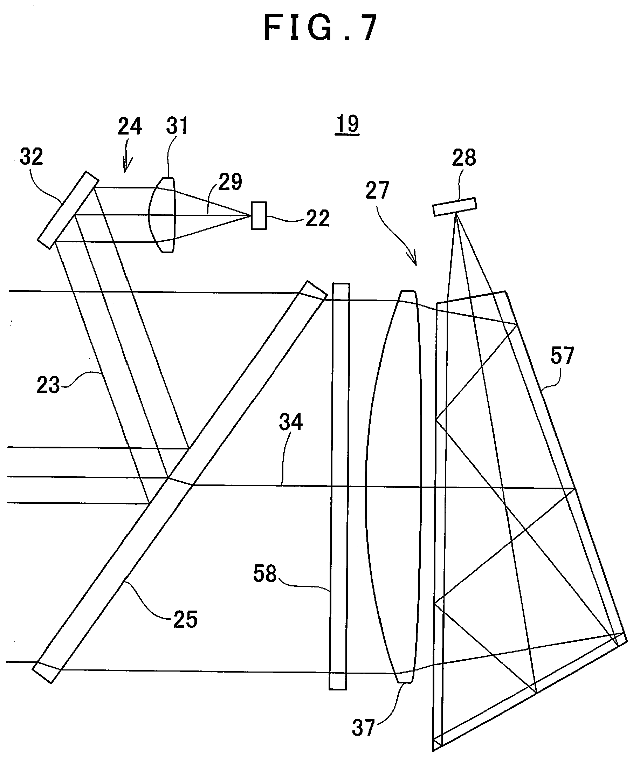

Next, a description will be given on a fourth embodiment of the present invention by referring to FIG.7. It is to be noted that, in FIG.7, the same components as shown in FIG.6 are referred by the same symbols, and a detailed description thereof will be omitted.

In the fourth embodiment, a light amount adjusting member 58 is provided between a deflecting optical member 25 and a receiving light lens 37 rather than between a light receiving prism 57 and a photodetector 28.

The light amount adjusting member 58 has a light amount adjusting surface (not shown) formed in a central portion thereof similar to the light amount adjusting member 38 (see FIG.3B). On the other hand, the light amount adjusting member 58 is a plane-parallel plate larger than a light flux of the reflected distance measuring light 26. Therefore, the light amount adjusting member 58 has a diameter which is substantially the same as, for instance, that of the receiving light lens 37.

In the fourth embodiment, likewise, the light receiving prism 57 is provided in a light receiving optical system 27, and an optical path length corresponding to a focal distance of the receiving light lens 37 is ensured with the use of the light receiving prism 57. Therefore, since a length in an optical axis direction of the light receiving optical system 27 can be shortened, an optical system of a distance measuring unit 19 can be miniaturized, and an entire surveying instrument can be miniaturized.

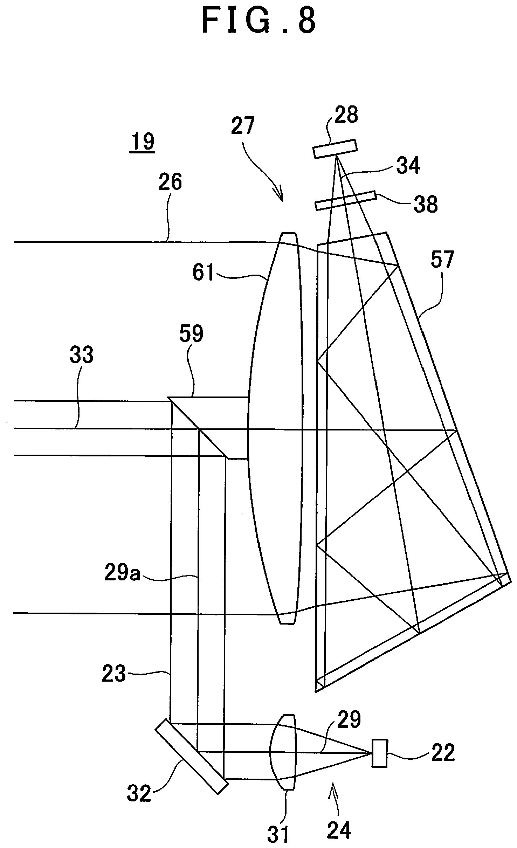

Next, a description will be given on a fifth embodiment of the present invention by referring to FIG.8. It is to be noted that, in FIG.8, the same components as shown in FIG.2 are referred by the same symbols, and a detailed description thereof will be omitted.

In the fifth embodiment, a reflecting prism 59 as a deflecting optical member is attached to a central portion of a receiving light lens 61. The receiving light lens 61 is a multifocal lens having a large curvature in the central portion.

In the fifth embodiment, the reflecting prism 59, the receiving light lens 61, a light receiving prism 57 and a light amount adjusting member 38 constitute a light receiving optical system 27.

Further, a projecting light optical system 24 is configured in such a manner that a reflecting mirror 32 reflects the distance measuring light 23 emitted from a light emitter 22 toward the reflecting prism 59 at a right angle.

A reflection surface of the reflecting prism 59 is a mirror having a metal or a dielectric vapor-deposited thereon. The reflecting prism 59 is placed on a common optical path of the distance measuring light 23 and the reflected distance measuring light 26, and the reflecting prism 59 is configured to deflect a reflection optical axis 29a reflected by the reflecting mirror 32 at a right angle so that the reflection optical axis 29a becomes coaxial with a light receiving optical axis 34 as a distance measuring optical axis 33.

In the fifth embodiment, the distance measuring light 23 emitted from the light emitter 22 is reflected by the reflecting prism 59 via the light projecting optical system 24, and the distance measuring light 23 is irradiated with the object. The reflected distance measuring light 26 reflected by the object passes through a periphery of the reflecting prism 59, and enters the receiving light lens 61.

The reflected distance measuring light 26 which has entered the receiving light lens 61 is sequentially transmitted through the receiving light lens 61 and the light receiving prism 57, and enters a photodetector 28. Alternatively, the reflected distance measuring light 26 which has entered the receiving light lens 61 is sequentially transmitted through the receiving light lens 61, the light receiving prism 57 and the light amount adjusting member 38, and enters the photodetector 28.

In the fifth embodiment, as the receiving light lens 61, a multifocal lens having a large curvature in a central portion is used. Therefore, a light receiving amount in the central portion near the light receiving optical axis 34 can be increased, and a light receiving amount in case of performing the near-distance measurement can be increased.

Further, as a deflecting optical member, the reflecting prism 59 having a reflection surface whose diameter is substantially the same as a beam diameter of the distance measuring light 23 is used, and the reflecting prism 59 is attached to the receiving light lens 61. Therefore, the deflecting optical member can be miniaturized, and a length in an optical axis direction of the light receiving optical system 27 can be shortened.

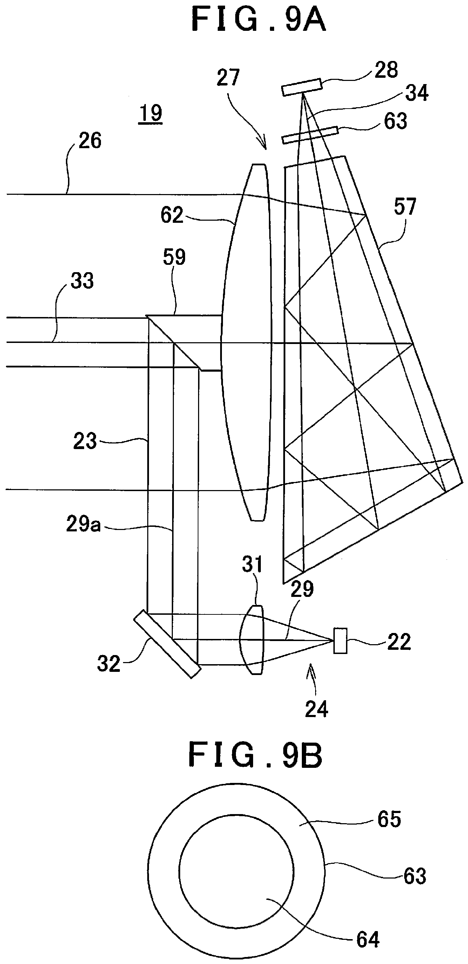

Next, a description will be given on a sixth embodiment of the present invention by referring to FIG.9A and FIG.9B. It is to be noted that, in FIG.9A and FIG.9B, the same components as shown in FIG.8 are referred by the same symbols, and a detailed description thereof will be omitted.

In the sixth embodiment, a receiving light lens 62 is a multifocal lens having a large curvature in an outer peripheral portion. Further, as shown in FIG.9B, in an incidence surface of a light amount adjusting member 63 for the reflected distance measuring light 26, a full-transmission surface 64 having an antireflection film vapor-deposited is formed at a central portion, and a light amount adjusting surface 65 having a reflection film vapor-deposited is formed at other portions than the full-transmission surface 64.

Further, as shown in FIG.9B, the full-transmission surface 64 has, for instance, a circular shape having a diameter of approximately 4 mm with a light receiving optical axis 34 as a center. That is, approximately 5% to 20% of the incidence surface of the light amount adjusting member 63 for the reflected distance measuring light 26 serve as the light amount adjusting surface 65.

It is to be noted that the reflection film is vapor-deposited to provide the light amount adjusting surface 65 in the above description, but an absorption film may be vapor-deposited to provide a light amount adjusting surface, or an electrochromic element may serve as a light amount adjusting surface. That is, as the light amount adjusting surface, any kind of film which can transmit through the reflected distance measuring light 26 in the range of, for instance, 10% to 50% may be used. The other structures are the same as the structures in the fifth embodiment.

In the sixth embodiment, as the receiving light lens 62, a multifocal lens having a large curvature in an outer peripheral portion is used. Therefore, a light receiving amount in the central portion near the light receiving optical axis 34 can be increased, and a light receiving amount in case of performing a near-distance measurement can be increased.

Further, in the receiving light lens 62, since the curvature of the outer peripheral portion is large, in the reflected distance measuring light 26 which enters the light amount adjusting member 63, the reflected distance measuring light 26 which increases in the short-distance measurement transmitted through the outer peripheral portion of the receiving light lens 62 enters an outer peripheral portion of the light amount adjusting member 63.

Therefore, in the light amount adjusting member 63, by forming the full-transmission surface 64 at the central portion and the light amount adjusting surface 65 at other portions, the light amount adjusting member 63 can prevent the saturation of an electrical system at the time of performing the short-distance measurement.

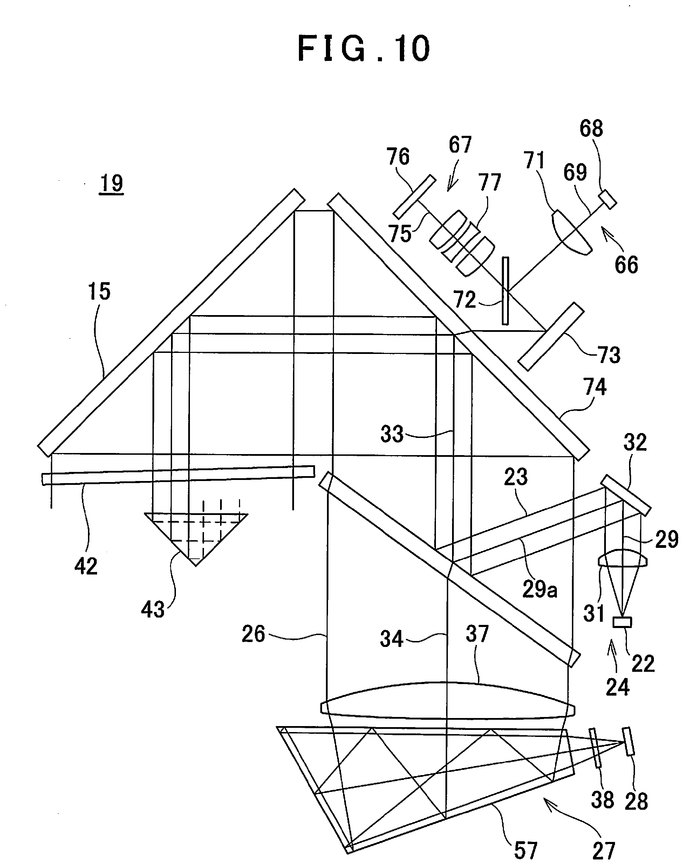

Next, a description will be given on a seventh embodiment of the present invention by referring to FIG.10. It is to be noted that, in FIG.10, the same components as shown in FIG.2 are referred by the same symbols, and a detailed description thereof will be omitted.

In the seventh embodiment, in addition to a light projecting optical system 24 and a light receiving optical system 27, other optical systems are coaxially provided. For instance, in FIG.10, a distance measuring unit 19 has a tracking light projecting optical system 66 which leads the tracking light to an object and a tracking light receiving optical system 67 which leads the reflected tracking light reflected by the object to a photodetector.

The tracking light projecting optical system 66 has a light projecting lens 71 and a beam splitter 72 which are provided on an optical axis of the tracking light (a tracking light projecting optical axis 69) projected from a tracking light emitter 68, a mirror 73 provided on a reflection optical axis of the beam splitter 72, and a short-pass filter plate 74 provided on a reflection optical axis of the mirror 73.

The tracking light emitter 68 is, for instance, a laser diode (LD) which projects a laser beam having a wavelength different from the distance measuring light as the tracking light. The beam splitter 72 deflects the tracking light projecting optical axis 69 coaxially with the tracking light receiving optical axis 75 (to be described later). That is, the beam splitter 72 is arranged on a common optical path of the tracking light and the reflected tracking light. Further, the mirror 73 reflects the tracking light projecting optical axis 69 toward the short-pass filter plate 74.

The short-pass filter plate 74 has optical characteristics to transmit through the tracking light and the reflected tracking light and reflect the distance measuring light 23 and the reflected distance measuring light 26. Further, the short-pass filter plate 74 deflects (reflects) a distance measuring optical axis 33 in such a manner that the distance measuring optical axis 33 becomes coaxial with the tracking light projecting optical axis 69 of the tracking light transmitted through the short-pass filter plate 74. Further, the short-pass filter plate 74 separates a light receiving optical axis 34 from the tracking light receiving optical axis 75. That is, the short-pass filter plate 74 is arranged on a common optical path of the distance measuring light 23 and the tracking light.

The tracking light receiving optical system 67 has a plurality of receiving light lenses 77, the beam splitter 72, the mirror 73 which are provided on an optical axis of the reflected tracking light (the tracking light receiving optical axis 75) received by a tracking photodetector 76, and the short-pass filter plate 74 provided on a reflection optical axis of the mirror 73.

The tracking photodetector 76 is a CCD or a CMOS sensor which is an aggregation of pixels, and each pixel can specify a position on the tracking photodetector 76. For instance, each pixel has pixel coordinates having the center of the tracking photodetector 76 as an origin, and the position on the tracking photodetector 76 can be specified by the pixel coordinates. A receiving signal and the pixel coordinate output from each pixel are input to the arithmetic control module 17 (see FIG.1).

At the time of performing the tracking, the tracking light is projected from the tracking light emitter 68, and sequentially reflected by the beam splitter 72 and the mirror 73. The tracking light reflected by the mirror 73 is transmitted through the short-pass filter plate 74, reflected by a scanning mirror 15, and irradiated to an object.

The reflected tracking light reflected by the object is reflected by the scanning mirror 15, and then transmitted through the short-pass filter plate 74. The reflected tracking light transmitted through the short-pass filter plate 74 is reflected by the mirror 73 and transmitted through the beam splitter 72 and the plurality of receiving light lenses 77. Then the reflected tracking light enters the tracking photodetector 76.

The arithmetic control module 17 calculates a deviation between the center of the tracking photodetector 76 and an incidence position of the reflected tracking light. Further, the arithmetic control module 17 controls a horizontal rotation motor 8 (see FIG.1) and a vertical rotation motor 13 (see FIG.1) so that the incidence position of the reflected tracking light coincides with the center of the tracking photodetector 76 based on the deviation. Thereby, a surveying instrument main body 3 (see FIG.1) tracks the object.

In the seventh embodiment, the light projecting optical system 24 and the tracking light projecting optical system 66 are provided in such a manner that the distance measuring optical axis 33 and a tracking light projecting optical axis 69 becomes coaxial with each other. Therefore, since the irradiation of the tracking light is performed coaxially with the distance measuring light 23, a tracking accuracy can be improved. Further, since some of the optical members used in the distance measurement and the tracking can be shared, the optical system can be miniaturized, and the number of components can be reduced.

It is to be noted that, in the above description, the tracking light projecting optical system 66 and the tracking light receiving optical system 67 are provided coaxially with the light projecting optical system 24. On the other hand, in place of the tracking light projecting optical system 66 and the tracking light receiving optical system 67, a laser pointer irradiation module which performs the irradiation of the visible light coaxially with the light projecting optical system 24 may be provided. Alternatively, the visible light may be used as the tracking light. By performing the irradiation of the visible light, the worker enables visually recognizing an irradiation position of the distance measuring light 23.

Further, in place of the tracking light projecting optical system 66 and the tracking light receiving optical system 67, an image pickup module may be provided. Alternatively, the tracking light projecting optical system 66, the tracking light receiving optical system 67, the laser pointer irradiation module and the image pickup module may be all coaxially provided.

It is to be noted that, in the present invention, needless to say, the first embodiment to the seventh embodiment may be appropriately combined.

## Claims

1. A surveying instrument comprising a distance measuring unit (19) which irradiates an object with the distance measuring light (23) and measures a distance to said object based on the reflected distance measuring light (26) from said object, wherein said distance measuring unit comprises a light emitter (22) configured to change an emission repetition frequency and the peak power of pulses of said distance measuring light to at least two, a light projecting optical system (24) configured to project said distance measuring light, and a light receiving optical system (28) configured to cause a photodetector to receive said reflected distance measuring light, wherein said light receiving optical system has a light amount adjusting member (38, 51, 63) which is insertable and removable with respect to an optical axis of said reflected distance measuring light, and said light amount adjusting member configured to adjust a light receiving amount of said reflected distance measuring light in correspondence with said emission repetition frequency and the peak power of the pulses.

2. The surveying instrument according to claim 1, wherein said light receiving optical system (28) further comprises a deflecting optical member (25) configured to deflect said distance measuring light (23) coaxially with said reflected distance measuring light (26), wherein said deflecting optical member has a beam splitter surface (35) which has the same or substantially the same diameter as a diameter of a light flux of said distance measuring light formed at an incidence position of said distance measuring light.

3. The surveying instrument according to claim 1, wherein said light amount adjusting member (38, 51) is configured in such a manner that a light amount adjusting surface (39, 55a, 56a) having a film with a predetermined transmittance is formed at a central portion, and a full-transmission surface (41, 55b, 56b) having an antireflection film is formed at other portions than said light amount adjusting surface.

4. The surveying instrument according to claim 1, wherein said light amount adjusting member (63) is configured in such a manner that a full-transmission surface (64) having an antireflection film is formed at a central portion, and a light amount adjusting surface (65) having a film with a predetermined transmittance is formed at other portions than said full-transmission surface.

5. The surveying instrument according to claim 3, wherein said light receiving optical system (28) further comprises a receiving light lens (61) which condenses said reflected distance measuring light, wherein said receiving light lens is a multifocal lens having a curvature increased in a central portion.

6. The surveying instrument according to claim 4, wherein said light receiving optical system (28) further comprises a receiving light lens (62) which receives said reflected distance measuring light, wherein said receiving light lens is a multifocal lens having a curvature increased in an outer peripheral portion.

7. The surveying instrument according to claim 1, wherein said light receiving optical system (28) further comprises a light receiving prism (57) having a square surface formed by an optical axis, and said light receiving prism is configured to internally reflect said reflected distance measuring light in said light receiving prism at least three times.

8. The surveying instrument according to claim 1, wherein said light amount adjusting member (51) has a disk-like shape rotatable via a rotation shaft (52), and said light amount adjusting member has at least three light amount adjusting portions (54, 55, 56) configured to coincide with an optical axis of said reflected distance measuring light (26), and one of said light amount adjusting portions are configured to enable selectively arranging on said optical axis of said reflected distance measuring light by the rotation of said light amount adjusting member.

9. The surveying instrument according to claim 1, further comprising a frame unit (5) which horizontally rotates around a horizontal rotation shaft (6) by a horizontal rotation motor (8), a scanning mirror (15) which is provided to said frame unit, vertically rotates around a vertical rotation shaft (11) by a vertical rotation motor (13), irradiates said object with said distance measuring light (23), and causes said reflected distance measuring light (26) from said object to enter said light receiving optical system (27), and an arithmetic control module (17) which controls the driving of said horizontal rotation motor, said vertical rotation motor, and said distance measuring unit (19), wherein said distance measuring unit further comprises a tracking light projecting optical system (66) which irradiates said object with the tracking light coaxially with said distance measuring light and a tracking light receiving optical system (67) which leads the reflected tracking light from said object to a tracking photodetector (68), wherein said arithmetic control module is configured to control said horizontal rotation motor and said vertical rotation motor based on a light receiving position of said reflected tracking light with respect to said tracking photodetector in such a manner that said object is tracked.

10. The surveying instrument according to claim 2, wherein said light amount adjusting member (38, 51) is configured in such a manner that a light amount adjusting surface (39, 55a, 56a) having a film with a predetermined transmittance is formed at a central portion, and a full-transmission surface (41, 55b, 56b) having an antireflection film is formed at other portions than said light amount adjusting surface.

11. The surveying instrument according to claim 2, wherein said light amount adjusting member (63) is configured in such a manner that a full-transmission surface (64) having an antireflection film is formed at a central portion, and a light amount adjusting surface (65) having a film with a predetermined transmittance is formed at other portions than said full-transmission surface.

12. The surveying instrument according to claim 10, wherein said light receiving optical system (28) further comprises a receiving light lens (61) which condenses said reflected distance measuring light, wherein said receiving light lens is a multifocal lens having a curvature increased in a central portion.

13. The surveying instrument according to claim 11, wherein said light receiving optical system (28) further comprises a receiving light lens (62) which receives said reflected distance measuring light, wherein said receiving light lens is a multifocal lens having a curvature increased in an outer peripheral portion.

14. The surveying instrument according to claim 2, wherein said light receiving optical system (28) further comprises a light receiving prism (57) having a square surface formed by an optical axis, and said light receiving prism is configured to internally reflect said reflected distance measuring light in said light receiving prism at least three times.

15. The surveying instrument according to claim 3, wherein said light receiving optical system (28) further comprises a light receiving prism (57) having a square surface formed by an optical axis, and said light receiving prism is configured to internally reflect said reflected distance measuring light in said light receiving prism at least three times.

16. The surveying instrument according to claim 4, wherein said light receiving optical system (28) further comprises a light receiving prism (57) having a square surface formed by an optical axis, and said light receiving prism is configured to internally reflect said reflected distance measuring light in said light receiving prism at least three times.

17. The surveying instrument according to claim 2, wherein said light amount adjusting member (51) has a disk-like shape rotatable via a rotation shaft (52), and said light amount adjusting member has at least three light amount adjusting portions (54, 55, 56) configured to coincide with an optical axis of said reflected distance measuring light (26), and one of said light amount adjusting portions are configured to enable selectively arranging on said optical axis of said reflected distance measuring light by the rotation of said light amount adjusting member.

18. The surveying instrument according to claim 3, wherein said light amount adjusting member (51) has a disk-like shape rotatable via a rotation shaft (52), and said light amount adjusting member has at least three light amount adjusting portions (54, 55, 56) configured to coincide with an optical axis of said reflected distance measuring light (26), and one of said light amount adjusting portions are configured to enable selectively arranging on said optical axis of said reflected distance measuring light by the rotation of said light amount adjusting member.

19. The surveying instrument according to claim 10, wherein said light amount adjusting member (51) has a disk-like shape rotatable via a rotation shaft (52), and said light amount adjusting member has at least three light amount adjusting portions (54, 55, 56) configured to coincide with an optical axis of said reflected distance measuring light (26), and one of said light amount adjusting portions are configured to enable selectively arranging on said optical axis of said reflected distance measuring light by the rotation of said light amount adjusting member.

20. The surveying instrument according to claim 2, further comprising a frame unit (5) which horizontally rotates around a horizontal rotation shaft (6) by a horizontal rotation motor (8), a scanning mirror (15) which is provided to said frame unit, vertically rotates around a vertical rotation shaft (11) by a vertical rotation motor (13), irradiates said object with said distance measuring light (23), and causes said reflected distance measuring light (26) from said object to enter said light receiving optical system (27), and an arithmetic control module (17) which controls the driving of said horizontal rotation motor, said vertical rotation motor, and said distance measuring unit (19), wherein said distance measuring unit further comprises a tracking light projecting optical system (66) which irradiates said object with the tracking light coaxially with said distance measuring light and a tracking light receiving optical system (67) which leads the reflected tracking light from said object to a tracking photodetector (68), wherein said arithmetic control module is configured to control said horizontal rotation motor and said vertical rotation motor based on a light receiving position of said reflected tracking light with respect to said tracking photodetector in such a manner that said object is tracked.
